# EUROPÄISCHE PATENTSCHRIFT

(11) **EP 2 601 498 B1**
(45) Veröffentlichungstag und Bekanntmachung des Hinweises auf die Patenterteilung: **23.09.2015**
(21) Anmeldenummer: 11736343.2
(22) Anmeldetag: 20.07.2011
(51) Int. Cl.: G01M 3/20, F04D 19/04, F04D 27/02, G01M 3/26

(54) **LECKSUCHGERÄT**
LEAK DETECTION APPLIANCE
DÉTECTEUR DE FUITES

(30) Priorität: 04.08.2010 DE 102010033373
(43) Veröffentlichungstag der Anmeldung: 12.06.2013
(73) Patentinhaber: Inficon GmbH, 50968 Köln (DE)
(72) Erfinder: DÖBLER, Ulrich, 42929 Wermelskirchen (DE)
(74) Vertreter: Von Kreisler Selting Werner - Partnerschaft von Patentanwälten und Rechtsanwälten mbB
(86) Internationale Anmeldenummer: PCT/EP2011/062472
(87) Internationale Veröffentlichungsnummer: WO 2012/016838

(56) Entgegenhaltungen:
- DE-A1- 4 228 313
- DE-A1-102006 056 215

## Beschreibung

Die Erfindung betrifft ein Lecksuchgerät mit einem Prüfeinlass zum Anschließen einer Testkammer, einer Hochvakuumpumpe, die mit einem Testgasdetektor verbunden ist, und einer Vorvakuumpumpe, die mindestens zwei Pumpstufen enthält.

Bekannt sind Lecksuchgeräte, die an eine Testkammer angeschlossen werden, in welcher sich der auf Dichtigkeit zu prüfende Prüfling befindet. Der Prüfling enthält ein leichtes Testgas, wie Helium, das mit einem Testgasdetektor, beispielsweise einem Massenspektrometer, erkannt werden kann. Der Testgasdetektor erfordert ein Hochvakuum von weniger als 10⁻⁴ mbar. Dieses Hochvakuum wird von einer Hochvakuumpumpe erzeugt, welche in Serie mit einer Vorvakuumpumpe betrieben wird. Die Hochvakuumpumpe enthält in der Regel eine Turbomolekularpumpe. Die Vorvakuumpumpe enthält mindestens eine Verdrängerpumpstufe, insbesondere eine Drehschieberpumpe.

Ein Pumpsystem für ein Lecksuchgerät ist in DIE 42 28 313 A1 (Leybold) beschrieben. Hierbei enthält die Hochvakuumpumpe zwei in Serie betriebene Molekularpumpstufen und die Vorvakuumpumpe besteht aus einer einzigen Pumpstufe. Bekannt sind auch Lecksuchgeräte mit einer zweistufigen Vorvakuumpumpe. Die zweistufige Vorvakuumpumpe hat die Aufgabe, eine hohe Unterdrückung des in der Umgebungsluft enthaltenen Heliumuntergrundes (Partialdrucks des Heliums) zu bewirken, um den Heliumuntergrund von dem Testgasdetektor fernzuhalten. Bei der zweistufigen Ausbildung der Vorvakuumpumpe multiplizieren sich die Kompressionsverhältnisse beider Pumpstufen. Die Pumpstufen werden in der Regel mit einem gemeinsamen Gehäuseblock realisiert und sie sind im Innern des Gehäuseblocks verbunden, ohne dass eine Zugangsmöglichkeit zu der Verbindung beider Pumpstufen besteht. Siehe z.B. DE 102006056215 A1.

Bei der Evakuierung der den Prüfling aufnehmenden Testkammer sollte das Abpumpen mit hohem Saugvermögen erfolgen, um die für das Abpumpen benötigte Zeit gering zu halten. EP 1 008 841 B1 (Alcatel) beschreibt ein Verfahren, bei dem eine Vorvakuumpumpe während des Abpumpens mit hoher Drehzahl betrieben wird, während der Messvorgang mit geringem Saugvermögen der Vorvakuumpumpe, jedoch mit hoher Druckdifferenz, durchgeführt wird.

Der Erfindung liegt die Aufgabe zugrunde, ein Lecksuchgerät zu schaffen, das einen Abpumpbetrieb und einen Detektionsbetrieb ermöglicht und bei dem auf einfache Weise zwischen beiden Betriebsarten umgeschaltet werden kann.

Das Lecksuchgerät der vorliegenden Erfindung ist durch den Patentanspruch 1 definiert. Es ist dadurch gekennzeichnet, dass zwischen den Pumpstufen der Vorvakuumpumpe ein Abgriff vorgesehen ist und diese Pumpstufen wahlweise in Serie oder parallel betreibbar sind.

Die beiden Pumpstufen, die beim Detektionsbetrieb hintereinander geschaltet sind, können zum Abpumpen parallel geschaltet werden. Dies hat den Vorteil, dass das Abpumpen der Prüfkammer mit hohem Saugvermögen durchgeführt wird und wenig Zeit beansprucht. Dagegen erfolgt der Detektionsbetrieb mit geringerem Saugvermögen und erhöhtem Vakuum. Die Pumpstufen der Vorvakuumpumpe werden also in unterschiedlichen Betriebsarten eingesetzt. Dies ergibt den Vorteil, dass das Abpumpen in relativ kurzer Zeit erfolgt und dass die zum Abpumpen parallel geschalteten Pumpstufen beim Prüfbetrieb in Serie betrieben werden. Damit ist ein hoher Nutzungsgrad beider Pumpstufen in jeder Betriebsart gewährleistet.

Gemäß einer bevorzugten Ausgestaltung der Erfindung ist zwischen den Pumpstufen der Vorvakuumpumpe eine Ventilvorrichtung vorgesehen, die den Auslass der ersten Pumpstufe in einem ersten Zustand mit dem Einlass und in einem zweiten Zustand mit dem Auslass der zweiten Pumpstufe verbindet. Dies ermöglicht eine einfache und kostengünstig Realisierung der Umschaltung zwischen Parallelbetrieb und Serienbetrieb. Bei der Ventilvorrichtung kann es sich um ein Dreiwegeventil handeln, das zwischen einer Durchgangsstellung und einer Abzweigstellung umschaltbar ist. Ferner kann ein Bypassventil vorgesehen sein, das den Prüfeinlass mit dem Einlass der zweiten Pumpstufe der Vorvakuumkammer verbindet. Das Bypassventil ist so gesteuert, dass es dann geöffnet ist, wenn sich die Ventilvorrichtung in ihrem zweiten Zustand (Abzweigstellung) befindet.

Zweckmäßigerweise sind die Pumpstufen der Vorvakuumpumpe von einem gemeinsamen Antrieb synchron angetrieben. Der Antrieb ist derart gesteuert, dass zum Abpumpen des in der Testkammer enthaltenen Gases eine hohe Drehzahl und nach Beendigung des Abpumpens eine niedrigere Drehzahl eingestellt wird. Hierdurch kann der Effekt der Erhöhung der Abpumpleistung noch vergrößert werden.

Die Steuerung der Drehzahl des Antriebs kann in Abhängigkeit von dem Druck am Prüfeinlass erfolgen. Der Druck am Prüfeinlass gibt Auskunft über den Druck in der Testkammer und den jeweils erforderlichen Pumpbetrieb.

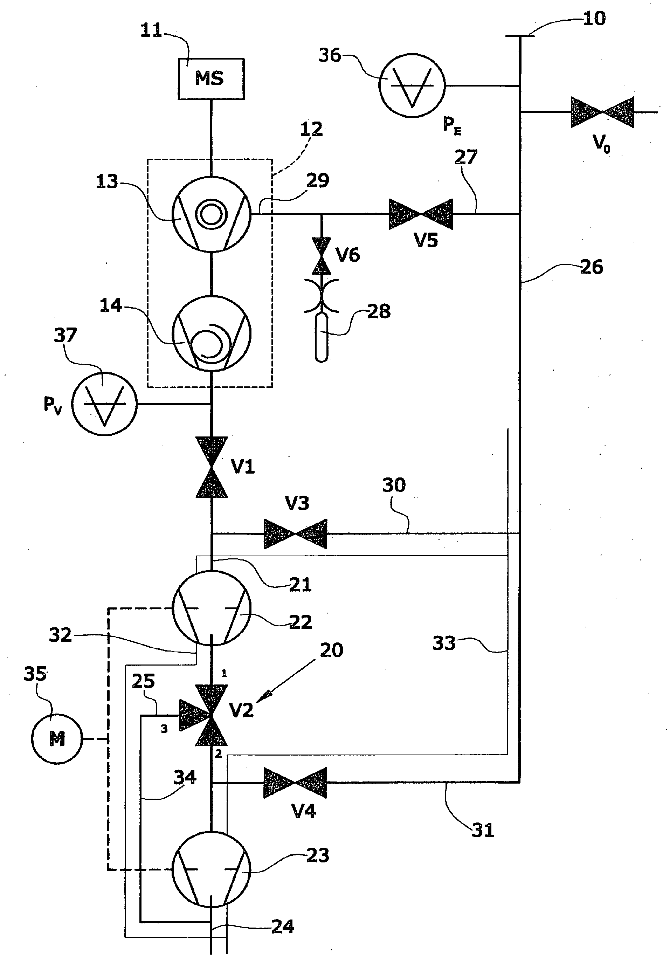

Im Folgenden wird unter Bezugnahme auf die einzige Figur der Zeichnung ein Ausführungsbeispiel der Erfindung näher erläutert.

In der Zeichnung ist ein schematisches Schaubild eines Lecksuchgerätes nach der Erfindung dargestellt.

Das dargestellte Lecksuchgerät ist ein Gegenstrom-Lecksucher. Dieser weist einen Prüfeinlass 10 auf, an den eine nicht dargestellte Testkammer angeschlossen wird, in die das Testobjekt eingebracht wird. Das Testobjekt, das auf Dichtigkeit geprüft wird, wird mit einem Testgas, z. B. Helium, gefüllt und die Prüfkammer wird durch Abpumpen evakuiert. Nach Erzeugen eines Hochvakuums wird durch einen Testgasdetektor 11 geprüft, ob Testgas aus dem Prüfling heraus in die Testkammer eingetreten ist.

Der Testgasdetektor 11 ist an eine Hochvakuumpumpe 12 angeschlossen, die eine erste Pumpstufe 13 und eine zweite Pumpstufe 14 enthält. Die erste Pumpstufe ist vorzugsweise eine Turbomolekularpumpe und die zweite Pumpstufe 14 eine Molekularpumpe. Beide Pumpstufen werden in Serie betrieben. Der Auslass der zweiten Pumpstufe 14 ist über ein schaltbares Ventil V1 mit dem Einlass 21 einer Vorvakuumpumpe 20 verbunden. Diese besteht aus einer ersten Pumpstufe 22 und einer zweiten Pumpstufe 23. Der Auslass der zweiten Pumpstufe 23 bildet den Auslass 24 der Vorvakuumpumpe 20, der in die Atmosphäre führt.

Der Prüfeinlass 10 ist mit einer Einlassleitung 26 verbunden. Von dieser führt ein erster Abzweig 27 mit einem Einlassventil V5 zu einem Zwischenanschluss 29 der ersten Pumpstufe 13 der Hochvakuumpumpe 12. An diesen Zwischenanschluss ist außerdem ein Testleck 28 angeschlossen, das eine geeichte Testgasquelle enthält, welche in dosiertem Mengenstrom Testgas abgeben kann, um eine Kalibrierung des Testgasdetektors 11 durchführen zu können. Ein zweiter Abzweig 30 von der Einlassleitung 26 führt über ein Absperrventil V3 zum Einlass der ersten Pumpstufe 22 der Vorvakuumpumpe 20. Ein dritter Abzweig 31 führt von der Einlassleitung 26 über ein Bypassventil V4 zum Einlass der zweiten Pumpstufe 23.

Zwischen der ersten Pumpstufe 22 und der zweiten Pumpstufe 23 befindet sich eine Ventilvorrichtung V2, die hier als Dreiwegeventil ausgebildet ist, das die Anschlüsse 1, 2 und 3 aufweist. Der Anschluss 3 bildet einen Zwischenanschluss 29 zwischen den Pumpstufen 22 und 23. Die Ventilvorrichtung kann zwischen einer Durchgangsstellung 1 - 2 und einer Abzweigstellung 1 - 3 umgeschaltet werden. Wenn sich die Ventilvorrichtung V2 in der Durchgangsstellung 1 - 2 befindet, ist das Bypassventil V4 gesperrt. Wenn sich die Ventilvorrichtung V2 in der Abzweigstellung 1 - 3 befindet, ist das Bypassventil V4 geöffnet. Auf diese Weise können die Pumpstufen 22, 23 zwischen Serienbetrieb und Parallelbetrieb umgeschaltet werden. Beim Serienbetrieb befindet sich die Ventilvorrichtung V2 in der Durchgangsstellung 1 - 2. Beim Parallelbetrieb befindet sie sich in der Abzweigstellung 1 - 3. Die sich bei Parallelbetrieb ergebenden Strömungswege sind mit 32 und 33 bezeichnet. Der eine Strömungsweg 32 führt durch die Pumpstufe 22 hindurch und über den Parallelweg 34 um die zweite Pumpstufe 23 herum zum Auslass 24. Der andere Parallelweg 33 führt von der Einlassleitung 26 an der ersten Pumpstufe 22 vorbei zum Bypassventil V4 und von dort über die zweite Pumpstufe 23.

Die beiden Pumpstufen 22 und 23 sind Verdrängerpumpen, beispielsweise Drehschieberpumpen. Die Pumpstufen können einen gemeinsamen Gehäuseblock haben. Die nötigen Ventile können extern angeordnet oder in den Gehäuseblock integriert werden.

Die Pumpstufen 22, 23 sind von einem gemeinsamen Antrieb 35 angetrieben, bei dem es sich um einen Drehzahlgesteuerten Motor handelt. Der Antrieb wird in Abhängigkeit von dem Druck P_{E} am Prüfeinlass 10 gesteuert, der von einem Drucksensor 36 aufgenommen wird. Solange der Druck am Prüfeinlass 10 einen Grenzwert übersteigt, werden die Pumpstufen 22, 23 der Vorvakuumpumpe 20 im Parallelbetrieb betrieben. Nach Absinken des Druckes unter den Grenzwert werden die Pumpstufen in seriellem Betrieb betrieben. Der Drucksensor 36 steuert auch die Drehzahl des Antriebs 35.

Ein weiterer Drucksensor 37 ist am Auslass der Hochvakuumpumpe 12 angeordnet, um den dort herrschenden Druck zu messen. Dieser Druck beträgt typischerweise < 10 mbar. Der Druck am Zwischenanschluss 29 der Pumpstufe 13 der Hochvakuumpumpe 12 beträgt typischerweise < 0,1 mbar und der Druck im Testgasdetektor 11 beträgt < 10⁻⁴ mbar.

An die Einlassleitung 26 ist ein Belüftungsventil VO angeschlossen, um den Vakuumbereich nach Beendigung des Betriebes lüften zu können.

## Patentansprüche

1. Lecksuchgerät mit einem Prüfeinlass (10) zum Anschließen einer Testkammer, einer Hochvakuumpumpe (12), die mit einem Testgasdetektor (11) verbunden ist, und einer Vorvakuumpumpe (20), die mindestens zwei Pumpstufen (22, 23) enthält,
**dadurch gekennzeichnet,**
**dass** zwischen den Pumpstufen (22, 23) der Vorvakuumpumpe ein Abgriff (25) vorgesehen ist und diese Pumpstufen wahlweise in Serie oder parallel betreibbar sind.

2. Lecksuchgerät nach Anspruch 1, **dadurch gekennzeichnet, dass** zwischen den Pumpstufen (22, 23) der Vorvakuumpumpe (20) eine Ventilvorrichtung (V2) vorgesehen ist, die den Auslass der ersten Pumpstufe (22) in einem ersten Zustand mit dem Einlass und in einem zweiten Zustand mit dem Auslass der zweiten Pumpstufe (23) verbindet.

3. Lecksuchgerät nach Anspruch 2, **dadurch gekennzeichnet, dass** ein Bypassventil (V4) den Prüfeinlass (10) mit dem Einlass der zweiten Pumpstufe (23) verbindet und dass das Bypassventil (V4) dann geöffnet ist, wenn sich die Ventilvorrichtung (V2) in ihrem zweiten Zustand befindet.

4. Lecksuchgerät nach einem der Ansprüche 1 - 3, **dadurch gekennzeichnet, dass** das Lecksuchgerät ein Gegenstrom-Lecksuchgerät ist, bei dem Prüfeinlass (10) mit einem Zwischenanschluss (29) der Hochvakuumpumpe (12) verbunden ist.

5. Lecksuchgerät nach einem der Ansprüche 1 - 4, **dadurch gekennzeichnet, dass** die beiden Pumpstufen (22, 23) der Vorvakuumpumpe (20) von einem gemeinsamen Antrieb (35) synchron angetrieben sind und dass der Antrieb derart gesteuert ist, dass zum Abpumpen des in der Testkammer enthaltenen Gases eine hohe Drehzahl und nach Beendigung des Abpumpens eine niedrigere Drehzahl eingestellt wird.

6. Lecksuchgerät nach Anspruch 5, **dadurch gekennzeichnet, dass** die jeweilige Drehzahl in Abhängigkeit von dem Druck (P_{E}) am Prüfeinlass (10) gewählt wird.

## Claims

1. A leak detection apparatus comprising a test inlet (10) for connection of a test chamber, a high-vacuum pump (12) connected to a test gas detector (11), and a pre-vacuum pump (20) including at least two pump stages (22, 23),
**characterized in**
**that** a tap (25) is provided between said pump stages (22, 23) of the pre-vacuum pump and that the pump stages can be selectively operated in series or in parallel.

2. The leak detection apparatus according to claim 1, **characterized in that** a valve device (V2) is provided between the pump stages (22, 23) of the pre-vacuum pump (20), said valve device, when in a first state, connecting the outlet of the first pump stage (22) to the inlet, and, when in a second state, to the outlet of the second pump stage (23).

3. The leak detection apparatus according to claim 2, **characterized in that** a bypass valve (V4) is operative to connect the test inlet (10) to the inlet of the second pump stage (23) and that said bypass valve (V4) is opened when the valve device (V2) is in its second state.

4. The leak detection apparatus according to any one of claims 1 - 3, **characterized in that** the leak detection apparatus is a counterflow leak detector wherein the test inlet (10) is connected to an intermediate connector (29) of the high-vacuum pump (12).

5. The leak detection apparatus according to any one of claims 1 - 4, **characterized in that** the two pump stages (22, 23) of the pre-vacuum pump (20) are driven synchronously by a common drive (35), and that said drive is controlled in such a manner that a higher rotational speed is set for pumping off the gas contained in the test chamber and that a lower rotational speed is set after termination of the pump-off process.

6. The leak detection apparatus according to claim 5, **characterized in that** the respective rotational speed is selected in dependence on the pressure (P_{E}) at the test inlet (10).

## Revendications

1. Détecteur de fuites avec une entrée de test (10) pour raccorder une chambre de test, une pompe à vide poussé (12) qui est reliée à un détecteur de gaz de test (11), et une pompe à vide préliminaire (20) qui comprend au moins deux étages de pompe (22, 23),
**caractérisé en ce qu'**une prise (25) est prévue entre les étages de pompe (22, 23) de la pompe à vide préliminaire et que les étages de pompe peuvent être mis en fonctionnement en parallèle ou en série.

2. Détecteur de fuites selon la revendication 1, **caractérisé en ce qu'**un dispositif de valve (V2) est prévu entre les étages de pompe (22, 23) de la pompe à vide préliminaire (20), qui relie la sortie du premier étage de pompe (22) dans un premier état avec l'entrée et dans un second état avec la sortie du deuxième étage de pompe (23).

3. Détecteur de fuites selon la revendication 2, **caractérisé en ce qu'**une valve de dérivation (V4) relie l'entrée de test (10) avec l'entrée du deuxième étage de pompe (23) et **en ce que** la valve de dérivation (V4) est ouverte lorsque le dispositif de valve (V2) est dans son second état.

4. Détecteur de fuites selon l'une des revendications 1 à 3, **caractérisé en ce que** le détecteur de fuites est un détecteur de fuites à contre-courant dans lequel l'entrée de test (10) est relié à une prise intermédiaire (29) de la pompe à vide poussé (12).

5. Détecteur de fuites selon l'une des revendications 1 à 4, **caractérisé en ce que** les deux étages de pompe (22, 23) de la pompe à vide préliminaire (20) sont entraînés de manière synchrone par un entraînement commun (35) et **en ce que** l'entraînement est commandé de façon qu'un nombre de tours élevé est ajusté pour extraire le gaz se trouvant dans la chambre de test et qu'un nombre de tours inférieur est ajusté après la fin de l'extraction.

6. Détecteur de fuites selon la revendication 5, **caractérisé en ce que** le nombre de tours respectif est choisi en fonction de la pression (P_{E}) à l'entrée de test (10).
